(19) Europäisches Patentamt
European Patent Office
Office européen des brevets

(11) Veröffentlichungsnummer: **0 581 235 B1**

(12) **EUROPÄISCHE PATENTSCHRIFT**

(45) Veröffentlichungstag der Patentschrift: **02.08.95**

(51) Int. Cl.[6]: **C09C 1/64**, C09D 17/00, C09D 7/12

(21) Anmeldenummer: **93111962.2**

(22) Anmeldetag: **27.07.93**

# (54) Verfahren zur Stabilisierung von Aluminiumpigmenten.

(30) Priorität: **30.07.92 AT 1547/92**

(43) Veröffentlichungstag der Anmeldung:
**02.02.94 Patentblatt 94/05**

(45) Bekanntmachung des Hinweises auf die Patenterteilung:
**02.08.95 Patentblatt 95/31**

(84) Benannte Vertragsstaaten:
**AT BE DE ES FR GB IT**

(56) Entgegenhaltungen:
**EP-A- 0 133 644**
**EP-A- 0 240 367**
**GB-A- 2 053 258**
**EP-A- 0 206 140**
**FR-A- 2 518 560**
**US-A- 4 808 231**

(73) Patentinhaber: **Vianova Kunstharz Aktiengesellschaft**
**Bundesstrasse 175**
**A-8402 Werndorf (AT)**

(72) Erfinder: **Wilfinger, Werner, Dr.**
**Händelstrasse 52**
**A-8042 Graz (AT)**

**EP 0 581 235 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der AT-PS 386 000 ist ein Verfahren zur Stabilisierung von Aluminiumpigmenten für die Verwendung in Wasserlacken mittels Phosphorsäurederivaten bekannt, welches dadurch gekennzeichnet ist, daß man das Aluminiumpigment, gegebenenfalls in Gegenwart eines Netzmittels und/oder organischer Lösemittel und/oder von Wasser, mit 0,1 bis 10 Gew.-%, vorzugsweise mit 1 bis 5 Gew.-%, bezogen auf das Aluminiumpigment, eines gegebenenfalls (teil)neutralisierten Carboxyalkylenphosphorsäureesters der Formel

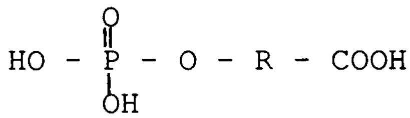

und/oder einer Carboxyalkylenphosphonsäure und/oder einer Carboxyalkylenphosphinsäure der Formel

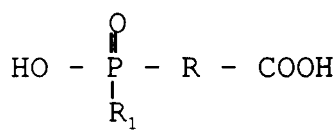

wobei R einen unverzweigten oder verzweigten, gegebenenfalls halogensubstituierten Alkylenrest mit 2 bis 17 C-Atomen und $R_1$ eine Hydroxylgruppe oder ein Wasserstoffatom bedeutet, mindestens 30 Minuten bei Raumtemperatur mischt und den Ansatz anschließend mindestens 12 Stunden bei Raumtemperatur reifen läßt.

Es wurde nun gefunden, daß diese Stabilisierung noch wesentlich verbessert und damit eine Langzeitschutzwirkung für Aluminiumpigmente in wäßrigen und nichtwäßrigen Lackzubereitungen auch unter extremen Bedingungen erreicht werden kann, wenn nach der Stabilisierung des Aluminiumpigments mit dem Phosphorsäurederivat ein zusätzlicher Beschichtungsvorgang mit einer säurehärtenden Bindemittelkombination vorgenommen und im Anschluß daran eine weitere Reifung durchgeführt wird.

Die Erfindung betrifft demgemäß ein Verfahren zur Stabilisierung von Aluminiumpigmenten, wobei man das Aluminiumpigment, gegebenenfalls in Gegenwart eines Netzmittels und/oder organischer Lösemittel und/oder von Wasser, mit 0,1 bis 10 Gew.-%, vorzugsweise mit 1 bis 5 Gew.-%, bezogen auf das Aluminiumpigment, eines gegebenenfalls (teil)neutralisierten Carboxyalkylenphosphorsäureesters der Formel

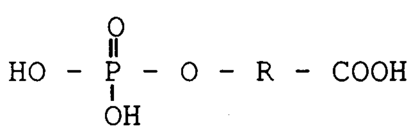

und/oder einer Carboxyalkylenphosphonsäure und/oder einer Carboxyalkylenphosphinsäure der Formel

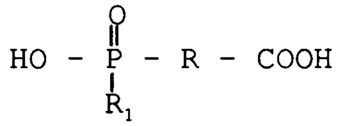

wobei R einen unverzweigten oder verzweigten, gegebenenfalls halogensubstituierten Alkylenrest mit 2 bis 17 C-Atomen und $R_1$ eine Hydroxylgruppe oder ein Wasserstoffatom bedeutet, mindestens 30 Minuten bei Raumtemperatur mischt und den Ansatz anschließend mindestens 12 Stunden bei Raumtemperatur reifen läßt, gemäß der AT-PS 386 000, welches dadurch gekennzeichnet ist, daß man ein derartig vorbehandeltes

Aluminiumpigment mit vorzugsweise aprotischen Lösungsmitteln auf einen Metallgehalt von 10 bis 40 Gew.-%, vorzugsweise von 20 bis 30 Gew.-%, verdünnt bzw. aufschlämmt, anschließend langsam und portionsweise 5 bis 40 Gew.-%, vorzugsweise 10 bis 20 Gew.-%, bezogen auf das Metallpigment, einer säurehärtenden Bindemittelkombination, welche aus 60 bis 90 Gew.-% eines Hydroxylgruppen - entsprechend einer Hydroxylzahl zwischen 30 und 200 mg KOH/g - aufweisenden Harzes und aus 40 bis 10 Gew.-% einer Vernetzungskomponente auf der Basis eines Aminoharzes besteht, wobei sich die angegebenen Zahlen für die Gewichtsprozente jeweils auf den Feststoffgehalt der Bindemittel beziehen, zugibt, die Mischung einer weiteren Reifung während 2 bis 24 Stunden bei 40 bis 80 °C, vorzugsweise während mindestens 6 Stunden bei 50 bis 70 °C, unterwirft und schließlich die so erhaltene stabilisierte Aluminiumpaste auf einen Metallgehalt von 40 bis 80 Gew.-% einstellt.

Die Erfindung betrifft weiters die nach diesem Verfahren hergestellten stabilisierten Aluminiumpigmente und deren Verwendung zur Formulierung von wäßrigen und nichtwäßrigen Lackzubereitungen.

Durch dieses Verfahren wird eine Langzeitstabilisierung der Aluminiumpigmente in Wasserlacken auch unter extremen Bedingungen, wie bei pH-Werten über 9,5 und/oder Temperaturen um 40 °C und/oder bei Verwendung von Neutralisationsmitteln vom Typ der Alkanolamine, erreicht.

Die erfindungsgemäß stabilisierten Aluminiumpigmente können aber auch in nichtwäßrigen Lackzubereitungen eingesetzt werden, wo sie sich durch eine gute Chemikalienbeständigkeit (z. B. Unempfindlichkeit gegen Fingerschweiß) auszeichnen.

Die für das erfindungsgemäße Verfahren geeignete säurehärtende Bindemittelkombination besteht aus 60 bis 90 Gew.-% eines Hydroxylgruppen aufweisenden Harzes und aus 40 bis 10 Gew.-% einer Vernetzungskomponente, wobei sich die angegebenen Zahlen für die Gewichtsprozente immer auf den Feststoffgehalt der Bindemittel beziehen.

Als Hydroxylgruppen aufweisende Harze können gesättigte Polyesterharze, Alkydharze, Polyurethanharze, Acrylatcopolymerisate, Pfropfcopolymerisate und Phenolharze verwendet werden. Diese Bindemittel sollen eine Hydroxylzahl zwischen 30 und 200 haben, wobei Produkte mit primären Hydroxylgruppen bevorzugt werden.

Die Vernetzungskomponenten sind Aminoharze, wie Harnstoff-, Melamin- oder Benzoguanamin-Formaldehydharze, die vollständig oder teilweise mit Monoalkoholen verethert sind. Vorzugsweise sind es Melamin-Formaldehydharze, die vollständig oder teilweise mit $C_1$-$C_4$-Alkoholen verethert sind.

Die erfindungsgemäß eingesetzten Bindemittel sind dem Fachmann bekannt, es handelt sich um allgemein zugängliche Handelsprodukte.

Für die Nachbehandlung des gemäß der AT-PS 386 000 stabilisierten Aluminiumpigments werden, bezogen auf das Aluminiumpigment, 5 bis 40 Gew.-%, vorzugsweise 10 bis 20 Gew.-%, der Bindemittelkombination eingesetzt.

Das mit dem Phosphorsäurederivat entsprechend der AT-PS 386 000 behandelte Metallpigment wird in aprotischen Lösemitteln, wie z. B. Diethylenglykoldimethylether, Methylisobutylketon, oder in aromatischen bzw. aliphatischen Kohlenwasserstoff-Lösemitteln, wobei letztere vorzugsweise nur anteilig in Kombination mit wassertoleranten Lösemitteln eingesetzt werden, aufgeschlämmt. Anschließend wird die Bindemittelkombination langsam und portionsweise zugesetzt. Die Mischung wird einer weiteren Reifung während 2 bis 24 Stunden bei 40 bis 80 °C, vorzugsweise während mindestens 6 Stunden bei 50 bis 70 °C, unterworfen. Zur Vermeidung von Agglomerationen ist es vorteilhaft, den Ansatz während der Reifungszeit zu rühren oder Ultraschall einwirken zu lassen.

Der Ansatz wird dann durch Absaugen, Abpressen oder Zentrifugieren vom Lösemittel befreit. Das stabilisierte Aluminiumpigment wird mit einem vorzugsweise wassermischbaren Lösungsmittel zur Reinigung aufgeschlämmt und ein zweites Mal abgesaugt, abgepreßt oder zentrifugiert, wobei, je nach Verfahren, eine Alupaste mit einem Metallgehalt von 40 bis 80 Gew.-% erhalten wird.

Die erfindungsgemäß hergestellten Aluminiumpigmentpräparationen sind im wäßrigen, alkalischen Milieu sehr gasungsstabil, d. h. die Bildung von Wasserstoff wird weitgehend unterbunden, und sie können daher vorteilhaft in wasserverdünnbaren Metalleffektlacken eingesetzt werden. Anwendungsgebiete sind Autolacke, sowohl Decklacke wie auch Basislacke, welche mit einem Klarlack überlackiert werden. Weiters können sie für die Formulierung von Effektlacken, wie von Hammerschlaglacken, verwendet werden. Es ist dabei von besonderem Vorteil, daß die Stabilisierung der Aluminiumpigmente in vielen Fällen mit den für den Lack vorgesehenen Bindemitteln durchgeführt werden kann.

Die nachfolgenden Beispiele erläutern die Erfindung, ohne sie zu beschränken. Alle Angaben in Teilen oder Prozenten beziehen sich, soweit nichts anderes angegeben ist, auf Gewichtseinheiten.

1. Bindemittelkomponenten

Die Kennzahlen (Herstellerangaben) der in den Beispielen verwendeten Bindemittelkomponenten sind in Tabelle 1 angeführt. Für die Lösemittel werden folgende Kurzbezeichnungen gebraucht:

| | |
|---|---|
| MPA | Methoxypropylacetat |
| SA | aromatenreiches Lacklösemittel, Siedebereich 140 bis 160 °C, z. B. SHELLSOL ® A, SHELL |
| BA | Butylacetat |
| TB | Lackbenzin (mit einem Gehalt von 17 Gew.-% Aromaten), Siedebereich 140 bis 170 °C |
| X | Xylol |
| IB | Isobutanol |
| B | n-Butanol |

2. Vorstabilisierung des Aluminiumpigments gemäß der AT-PS 386 000

Als Aluminiumpigment wird ein Produkt mit folgenden Kennwerten eingesetzt:

MP I Handelsübliche Aluminiumpaste mit einem Feinheitsbereich zwischen 10 und 30 µm; Nonleafing-Type; Metallanteil 65 Gew.-%; Lösemittelanteil (inklusive Fett und Zusatzstoffe) 35 Gew.-%; Lösemittel: Testbenzin/Lösungsbenzol; durchschnittliche Teilchengröße (nach DIN 4190): 22 µm.

Die Vorstabilisierung erfolgt mit dem in der AT-PS 386 000 angegebenen Stabilisierungsmittel (A), welches in folgender Weise hergestellt wird:
In einem mit Rührer, Thermometer, Wasserabscheider und Kühler ausgestatteten Reaktionsgefäß werden 114 Tle ε-Caprolacton vorgelegt und unter Berücksichtigung der auftretenden Exothermie 116 Tle ortho-Phosphorsäure (handelsübliche 85%ige Lösung in Wasser = 1 Mol $H_3PO_4$) zugegeben. Nach Abklingen der Exothermie wird die Masse auf 200 °C erhitzt, wobei 18 Tle Wasser abdestilliert werden. Das klare und hellbraune Produkt weist eine Säurezahl von 650 mg KOH/g auf.

100 Tle der Aluminiumpaste (entsprechend 65 Teilen Metall) werden in Gegenwart von 26 Tlen Diethylenglykoldimethylether und 87,45 Tlen Methylisobutylketon mit 3,25 Tlen (5 Gew.-%, bezogen auf Metall) des Stabilisierungsmittels (A) gemischt und 6 Stunden unter Rühren bei Raumtemperatur gereift.

3. Beispiele 1 bis 7 und Vergleichsbeispiel V1

Es wird der derartig vorstabilisierten Aluminiumpigment-Aufschlämmung unter gutem Rühren langsam und portionsweise eine der in der Tabelle 2 angeführten Bindemittelkombinationen in der angegebenen Menge zugesetzt, 30 Minuten gerührt, und dann unter den ebenfalls in Tabelle 2 beschriebenen Bedingungen gereift. Nach Entfernung des Aufschlämmungsmittels durch Absaugen wird die Aluminiumpaste zur Reinigung in 50 Tlen Butylglykol aufgeschlämmt und wiederum durch Absaugen vom Waschlösemittel befreit. Die zurückbleibende Aluminiumpaste weist einen nichtflüchtigen Anteil von 40 bis 80 Gew.-% auf, der in erster Näherung dem Metallgehalt gleichgesetzt werden kann. 24 Stunden nach der Stabilisierung wird die Pigmentstabilität nach folgender Methode geprüft:
In einem thermo-stabilisierten Doppelwand-Erlenmeyer-Kolben (Innenvolumen 200 ml), der verschließbar ist und ein bis zum Boden des Kolbens reichendes Steigrohr (lichte Weite 4 mm, kalibriert in cm ) aufweist, werden die 10 g Aluminium (Metall) entsprechende Menge der stabilisierten Aluminiumpaste, 20 g Methoxypropanol und 100 g einer wäßrigen Lösung von Natriumtetraborat ($Na_2$-$B_4O_7$) (0,024 molar) und Natriumhydroxid (NaOH) (0,002 molar zur Feineinstellung des pH-Werts auf 9,3) eingewogen.

Die Mischung wird auf 60 °C erwärmt, bis zum Temperaturausgleich belüftet, denn gasdicht verschlossen und 24 Stunden bei 60 °C gehalten. Der Anstieg des Kolbeninhalts im Steigrohr wird in cm (über dem Flüssigkeitsspiegel) angegeben. Die Ergebnisse sind in der Tabelle 2 zusammengefaßt. Als Vergleichsbeispiel (V1) dient die vorstabilisierte Aluminiumpaste.

Tabelle 1

| Harz | Harztyp | Lieferform | Säurezahl mg KOH/g | Hydroxylzahl mg KOH/g | Viskosität (Lieferform) mPa.s | Handelsprodukt | |
|---|---|---|---|---|---|---|---|
| A | Hydroxylfunktionelles Acrylharz für 2-Komponenten-Industrielacke | 65%ig in MPA | unter 5 | ca. 80 | ca. 3500 | VIACRYL SM 564 | (1) |
| B | Hydroxylfunktionelles Acrylharz für Serien-Autodecklacke | 60%ig in SA/BA | ca. 18 | ca. 85 | ca. 1100 | VIACRYL SC 341 | (1) |
| C | Oxidativ trocknendes, mittelöliges Alkydharz für Autoreparatur- und Maschinenlacke | 55%ig in TB | unter 15 | ca. 60 | ca. 15000 | VIALKYD AF 474 | (1) |
| D | Epoxidharzfettsäureester für Füller und Grundierungen | 60%ig in X | unter 6 | ca. 150 | ca. 14000 | VIALKYD EF 935 | (1) |
| E | Hydroxylgruppenhaltiges Fluorcopolymer für die Lackanwendung | 50%ig in BA | -- | ca. 115 | ca. 800 | GENOFLON VTF 812 | (2) |
| F | Nichtplastifiziertes Melamin-Formaldehydharz | 60%ig in IB | -- | -- | ca. 1000 | VIAMIN MF 514 | (1) |
| G | Nichtplastifiziertes Harnstoff-Formaldehydharz | 70%ig in IB | -- | -- | ca. 22000 | VIAMIN HF 164 | (1) |
| H | Nichtplastifiziertes Benzoguanaminahrz | 72%ig in B | -- | -- | ca. 200 | MAPRENAL MF 980 | (2) |
| I | Nichtplastifiziertes Melamin-Formaldehydharz | 55%ig in IB | -- | -- | ca. 450 | MAPRENAL MF 650 | (2) |

(1) Hersteller: VIANOVA KUNSTHARZ AG, Österreich
(2) Hersteller: HOECHST AG, BRD

Die Typennamen sind registrierte Markenbezeichnungen

Tabelle 2

| Beispiel | Bindemittelkombination | | | | Reifung | Prüfung |
|---|---|---|---|---|---|---|
| | Hydroxyl-Komponente (I) | Vernetzungskomponente (II) | Verhältnis [1]) (I) : (II) | Menge (I) und (II)[1]) bezogen auf Metallpigment | Stn /°C | Gasentwicklung Steighöhe cm |
| 1 | A | F | 80 : 20 | 10 % | 12/60 | 4 |
| 2 | B | F | 75 : 25 | 30 % | 8/70 | 6 |
| 3 | C | G | 80 : 20 | 10 % | 4/80 | 8 |
| 4 | D | H | 60 : 40 | 15 % | 24/60 | 5 |
| 5 | E | I | 70 : 30 | 12 % | 24/40 | 2 |
| 6 | A | F | 75 : 25 | 5 % | 12/60 | 6 |
| 7 | A | I | 80 : 20 | 20 % | 12/60 | 3 |
| V1 | - | - | - | - | - | über 30 (vollständig zersetzt) |

[1]) bezogen auf den Feststoffgehalt der Bindemittel

## Patentansprüche

1. Verfahren zur Stabilisierung von Aluminiumpigmenten, wobei man das Aluminiumpigment, gegebenenfalls in Gegenwart eines Netzmittels und/oder organischer Lösemittel und/oder von Wasser, mit 0,1 bis

10 Gew.-%, vorzugsweise mit 1 bis 5 Gew.-%, bezogen auf das Aluminiumpigment, eines gegebenenfalls (teil)neutralisierten Carboxyalkylenphosphorsäureesters der Formel

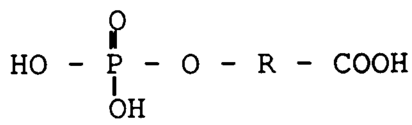

und/oder einer Carboxyalkylenphosphonsäure und/oder einer Carboxyalkylenphosphinsäure der Formel

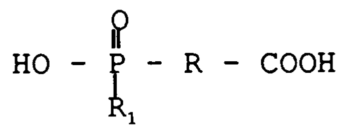

wobei R einen unverzweigten oder verzweigten, gegebenenfalls halogensubstituierten Alkylenrest mit 2 bis 17 C-Atomen und $R_1$ eine Hydoxylgruppe oder ein Wasserstoffatom bedeutet, mindestens 30 Minuten bei Raumtemperatur mischt und den Ansatz anschließend mindestens 12 Stunden bei Raumtemperatur reifen läßt, dadurch gekennzeichnet, daß man ein derartig vorbehandeltes Aluminiumpigment mit vorzugsweise aprotischen Lösemitteln auf einen Metallgehalt von 10 bis 40 Gew.-%, vorzugsweise von 20 bis 30 Gew.-%, verdünnt bzw. aufschlämmt, anschließend langsam und portionsweise 5 bis 40 Gew.-%, vorzugsweise 10 bis 20 Gew.-%, bezogen auf das Metallpigment, einer säurehärtenden Bindemittelkombination, welche aus 60 bis 90 Gew.-% eines Hydroxylgruppen - entsprechend einer Hydroxylzahl zwischen 30 und 200 mg KOH/g - aufweisenden Harzes und aus 40 bis 10 Gew.-% einer Vernetzungskomponente auf der Basis eines Aminoharzes besteht, wobei sich die angegebenen Zahlen für die Gewichtsprozente jeweils auf den Feststoffgehalt der Bindemittel beziehen, zugibt, die Mischung einer weiteren Reifung während 2 bis 24 Stunden bei 40 bis 80 °C, vorzugsweise während mindestens 6 Stunden bei 50 bis 70 °C, unterwirft und schließlich die so erhaltene stabilisierte Aluminiumpaste auf einen Metallgehalt von 40 bis 80 Gew.-% einstellt.

**2.** Verfahren nach Anspruch 1, dadurch gekennzeichnet, daß man als Hydroxylgruppen aufweisendes Harz ein gesättigtes Polyesterharz oder ein Alkydharz oder ein Polyurethanharz oder ein Acrylatcopolymerisat oder ein Pfropfcopolymerisat oder ein Phenolharz oder Mischungen derartiger Harze einsetzt.

**3.** Verfahren nach den Ansprüchen 1 und 2, dadurch gekennzeichnet, daß man als Vernetzungskomponente ein oder mehrere, mit Monoalkoholen vollständig oder teilweise veretherte Harnstoff- und/oder Melamin- und/oder Benzoguanamin-Formaldehydharze einsetzt.

**4.** Verfahren nach Anspruch 3, dadurch gekennzeichnet, daß man als Vernetzungskomponente ein Melamin-Formaldehydharz einsetzt, dessen Methylolgruppen vollständig oder teilweise mit $C_1$-$C_4$-Monoalkoholen verethert sind.

**5.** Verfahren nach den Ansprüchen 1 bis 4, dadurch gekennzeichnet, daß man den Ansatz während der Reifungszeit rührt und/oder Ultraschall einwirken läßt.

**6.** Verwendung der nach den Ansprüchen 1 bis 5 hergestellten stabilisierten Aluminiumpigmente zur Formulierung von wäßrigen und nichtwäßrigen Lackzubereitungen.

## Claims

**1.** Process for stabilizing aluminium pigments in which the aluminium pigment, optionally in the presence of a wetting agent and/or organic solvents and/or water is mixed at room temperature for at least 30 minutes with from 0.1 to 10% by weight, preferably from 1 to 5% by weight based on the aluminium pigment, of an optionally (partially) neutralized carboxyalkylenephosphoric ester of the formula

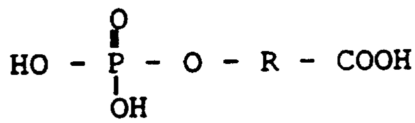

and/or a carboxyalkylenephosphonic acid and/or a carboxyalkylenephosphinic acid of the formula

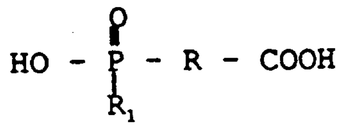

where R is an unbranched or branched, optionally halogen-substituted alkylene radical having 2 to 17 carbon atoms and $R_1$ is a hydroxyl group or a hydrogen atom, and the batch is then allowed to age at room temperature for at least 12 hours, characterized in that an aluminium pigment pretreated in this way is diluted or suspended with preferably aprotic solvents to or at a metal content of from 10 to 40% by weight, preferably from 20 to 30% by weight, then from 5 to 40% by weight, preferably from 10 to 20% by weight, based on the metal pigment, of an acid-curing binder combination which comprises from 60 to 90% by weight of a resin containing hydroxyl groups - corresponding to a hydroxyl number between 30 and 200 mg of KOH/g - and from 40 to 10% by weight of an amino resin-based crosslinking component, the figures indicated for the percentages by weight being based in each case on the solids content of the binders, is added slowly and in portions, the mixture is subjected to additional ageing at from 40 to 80 °C for from 2 to 24 hours, preferably from 50 to 70 °C for at least 6 hours, and finally the stabilized aluminium paste obtained in this way is adjusted to a metal content of from 40 to 80% by weight.

**2.** Process according to Claim 1, characterized in that the hydroxyl-containing resin employed is a saturated polyester resin or an alkyd resin or a polyurethane resin or an acrylate copolymer or a graft copolymer or a phenolic resin or mixtures of such resins.

**3.** Process according to Claims 1 and 2, characterized in that the crosslinking component employed comprises one or more urea- and/or melamine- and/or benzoguanamine-formaldehyde resins which are completely or partially etherified with monoalcohols.

**4.** Process according to Claim 3, characterized in that the crosslinking component employed is a melamineformaldehyde resin whose methylol groups are completely or partially etherified with $C_1$-$C_4$ monoalcohols.

**5.** Process according to Claims 1 to 4, characterized in that the batch is stirred and/or subjected to ultrasound during the ageing period.

**6.** Use of the stabilized aluminium pigments prepared according to Claims 1 to 5 for the formulation of aqueous and nonaqueous coating compositions.

### Revendications

**1.** Procédé de stabilisation de pigments d'aluminium, selon lequel on mélange le pigment d'aluminium, éventuellement en présence d'un agent mouillant et/ou de solvants organiques et/ou d'eau, avec 0,1 à 10 % en masse, de préférence avec 1 à 5 % en masse, par rapport au pigment d'aluminium, d'un phosphate de carboxyalkylène, éventuellement (partiellement) neutralisé, de formule

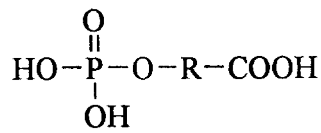

et/ou d'un acide carboxyalkylènephosphonique et/ou d'un acide carboxyalkylènephosphinique de formule

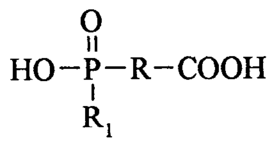

dans laquelle R représente un reste alkylène de 2 à 17 atomes de carbone linéaire ou ramifié, éventuellement halogéné, et $R_1$ représente un groupe hydroxy ou un atome d'hydrogène, pendant au moins 30 minutes à la température ambiante, et on soumet ensuite le mélange à une maturation pendant au moins 12 heures à la température ambiante, caractérisé en ce que l'on dilue ou on met en suspension un pigment d'aluminium ayant subi un tel traitement préalable avec des solvants de préférence aprotiques à une teneur en métal de 10 à 40 % en masse, de préférence de 20 à 30 % en masse, on ajoute ensuite, lentement et par portions, 5 à 40 % en masse, de préférence 10 à 20 % en masse, par rapport au pigment métallique, d'une combinaison de liants durcissant à l'acide constituée de 60 à 90 % en masse d'une résine contenant des groupes hydroxy - correspondant à un indice d'hydroxy compris entre 30 et 200 mg de KOH/g - et de 40 à 10 % en masse d'un constituant réticulant à base d'une résine amino, les valeurs indiquées pour les pourcentages en masse se rapportant toujours à la teneur en substance solide des liants, on soumet le mélange à une nouvelle maturation pendant 2 à 24 heures à une température de 40 à 80 °C, de préférence pendant au moins 6 heures à une température de 50 à 70 °C, et finalement on ajuste la pâte d'aluminium stabilisée ainsi obtenue à une teneur en métal de 40 à 80 % en masse.

**2.** Procédé selon la revendication 1, caractérisé en ce que l'on utilise comme résine contenant des groupes hydroxy une résine polyester saturée ou une résine alkyde ou une résine polyuréthane ou un copolymère d'acrylate ou un copolymère greffé ou une résine phénolique ou des mélanges de telles résines.

**3.** Procédé selon les revendications 1 et 2, caractérisé en ce que l'on utilise comme constituant réticulant une ou plusieurs résines urée- et/ou mélamine- et/ou benzoguanamine-formaldéhyde entièrement ou partiellement éthérifiées avec des monoalcools.

**4.** Procédé selon la revendication 3, caractérisé en ce que l'on utilise comme constituant réticulant une résine mélamine-formaldéhyde dont les groupes méthylol sont entièrement ou partiellement éthérifiés avec des monoalcools en $C_1$-$C_4$.

**5.** Procédé selon les revendications 1 à 4, caractérisé en ce que l'on agite le mélange pendant le temps de maturation et/ou on fait agir des ultrasons.

**6.** Utilisation des pigments d'aluminium stabilisés préparés selon les revendications 1 à 5 pour la formulation de compositions de peintures aqueuses et non aqueuses.